**Europäisches Patentamt**

**European Patent Office**

**Office européen des brevets**

(19)

(11) Veröffentlichungsnummer: **0 133 577**
**B1**

(12)

# EUROPÄISCHE PATENTSCHRIFT

(45) Veröffentlichungstag der Patentschrift:
03.05.89

(21) Anmeldenummer: 84109460.0

(22) Anmeldetag: 08.08.84

(51) Int. Cl.⁴: **G 06 F 13/22, H 04 L 11/16,
H 04 Q 11/04**

(54) **Datenübertragungsverfahren in einem digitalen Übertragungsnetzwerk und Vorrichtung zur Durchführung des Verfahrens.**

(30) Priorität: 12.08.83 DE 3329228

(43) Veröffentlichungstag der Anmeldung:
27.02.85 Patentblatt 85/9

(45) Bekanntmachung des Hinweises auf die Patenterteilung:
03.05.89 Patentblatt 89/18

(84) Benannte Vertragsstaaten:
**AT CH DE FR GB IT LI NL SE**

(56) Entgegenhaltungen:
**EP-A- 0 037 499**
**DE-A- 2 126 456**
**DE-A- 2 257 164**
**US-A- 4 001 785**

**PATENTS ABSTRACTS OF JAPAN, Band 1, Nr. 109, 24.
September 1977, Seite 3213M77 & JP - A - 52 46285
WESCON CONFERENCE RECORD, Band 24, 16.-18.
September 1980, Seiten 1/2-1 bis 1/2-16, Anaheim, USA;
R.L. EVANS: "Data communications for standalone
minicomputers"
PATENTS ABSTRACTS OF JAPAN, Band 7, Nr.
144(E-183)(1289), 23. Juni 1983 & JP - A - 58 56553**

(73) Patentinhaber: **Siemens Aktiengesellschaft Berlin und
München, Wittelsbacherplatz 2, D-8000 München 2 (DE)**

(72) Erfinder: **Geiger, Gerhard, Dipl.-Ing.,
Hohenwaldeckstrasse 7, D-8162 Schliersee (DE)**
Erfinder: **Strafner, Michael, Dipl.-Ing., St.
Cajetanstrasse 14, D-8000 München 80 (DE)**

## Beschreibung

Die Erfindung betrifft ein Datenübertragungsverfahren in einem hierarchisch organisierten digitalen Übertragungsnetzwerk mit mindestens einer übergeordneten Einheit und mit mehreren, über ein Bussystem angeschlossenen untergeordneten Einheiten, welche jeweils mit mehreren Endstellen über Leitungsverbindungen Daten austauschen, die nach einer Anfrage-/Quittungsprozedur an die übergeordnete Einheit weitergeleitet werden und eine Vorrichtung zur Durchführung dieses Verfahrens.

Zur busorientierten Übertragung von digitalen Daten in Netzwerken sind Verfahren bekannt, die auf einer vorgegebenen Hierarchie der angeschlossenen Netzknoten und Baugruppen beruhen. Innerhalb dieser sogenannten Master-Slave-Systeme kontrolliert eine übergeordnete Einheit (Master) die Übertragungswege und gibt Befehle an die untergeordneten Einheiten (Slaves), die diese Befehle ausführen, und die auf die Befehle mit Antwortsignalen reagieren.

Aus «Patents Abstracts of Japan», Band 1, Nr. 109, Sept. 1977, Seite 3213 M 77, JP-A-5 246 285 ist eine in zwei Hierarchieebenen organisierte Überwachungskontrolleinrichtung bekannt, bei der untergeordnete Einheiten nach einer Anfrage (Polling) einer übergeordneten Einheit geänderte Datenwörter übertragen, die mit Hilfe einer Änderungsdetektoreinrichtung festgestellt worden sind. Dem Dokument «Patents Abstracts of Japan», Band 7, Nr. 144 (E-183) (1289), Juni 1983, JP-A-5 856 553 ist eine Änderungsdetektoreinrichtung zu entnehmen, bei der zur Entlastung einer Datenverarbeitungseinrichtung nicht die Daten selbst weitergeleitet werden, sondern Kennzeichen, die bei Änderungen einer gerade abgetasteten korrespondierenden, parallel anliegenden Eingangsdatengruppe erzeugt werden.

Eine genormte, häufig in öffentlichen Netzen eingesetzte Übertragungsvorschrift ist die CCITT-Empfehlung X.25, die den Datenaustausch auf den Übertragungswegen regelt. Die zu übertragenden Daten sind dabei vereinbarungsgemäß bitseriell orientiert, und zusammen mit Adreßbits zu Informationseinheiten in einem Rahmen aus Steuer- und Prüfbits verpackt.

Ein Einsatzbeispiel für ein digitales Datenübertragungsnetz stellt ein Telefonvermittlungssystem dar. Es weist eine zentrale Vermittlungsstelle mit einer als Master dienenden Recheneinheit, mehrere vom Master abhängige dezentrale (periphere) Konzentratoren und daran angeschlossene Endstellen auf. Außer der eigentlichen Nutzinformation, die zwischen den Endstellen übertragen wird, müssen dabei zusätzlich sogenannte Signalisierungsdaten zwischen Endstelle und Vermittlungssystem übertragen werden, beispielsweise Belegzeichen, Melde-, Ruf- und Wählzeichen, sowie Gebühreninformationen. Deshalb ist neben einem Bus für die Nutzinformation zwischen den Konzentratoren und der zentralen Recheneinheit ein weiterer Bus vorgesehen, auf welchem in verpackter Form die Signalisierungsdaten übermittelt werden.

Wesentliche Hilfsfunktionen bei der Durchführung einer Datenübertragung nach dem eingangs beschriebenen Master-Slave-Prinzip führen Kontrollbausteine aus, mit welchen alle untergeordneten Einheiten versehen sind. Ihre Funktionen sind ersichtlich auf der im folgenden kurz wiedergegebenen Übertragungsprozedur, die aus dem Stand der Technik bekannt ist und hier für den Austausch von Signalisierungspaketen zwischen lokalen Konzentratoren und zentraler Recheneinheit (Prozessor) angewandt wird:

- der Master fordert die Slaves nacheinander auf, Daten zu senden,
- der Kontrollbaustein des jeweils adressierten Slaves fordert daraufhin mit einem Unterbrechungswunsch den zugeordneten Master zur Auswertung der Kommandos auf,
- nach einer, beispielsweise von der Bereitstellung der zu sendenden Daten abhängigen Reaktionszeit startet der Master den Sendevorgang des Slaves. Die Daten werden zum Master übertragen.

Weitere Einzelheiten bezüglich eines derartigen Kontrollbausteins sind beispielsweise aus INTEL, Comp. DATA Catalog, January 1981, Seite 8-163 bis 8-175 entnehmbar.

In Anwendungsfällen, in welchen relativ wenig Daten anfallen, wird jedoch durch dieses Übertragungsschema ein großer Teil der zur Verfügung stehenden Verarbeitungszeit des Masters unnötigerweise zur Durchführung dieser Verfahrensschritte verwendet, weil die adressierte Kontrolleinheit jede Abfrage per Interruptanforderung an den Progressor meldet; die Übertragungsstrecke ist in dieser Zeit blockiert. So ist beispielsweise bei einem Telefonvermittlungssystem mit mehreren Teilnehmeranschlüssen statistisch erwiesen, daß nur jeweils ein kleiner Teil der Teilnehmer gleichzeitig die Übertragungsstrecke benützt oder benützen will. Besonders in derartigen Anwendungsfällen haben deshalb die bekannten Übertragungsverfahren den Nachteil, daß trotzdem zyklisch mit allen Teilnehmern eine relativ zeitaufwendige Anforderungs-(Quittungsprozedur) durchzuführen ist, obwohl keine Daten zur Übertragung bereit gestellt sind bzw. keine Übertragung gewünscht wird. Innerhalb einer vorgegebenen Zykluszeit ist jedoch die Anzahl der untergeordneten Einheiten, mit welchen die zentrale Einheit kommunizieren kann, von der Dauer der einzelnen Datenaustauschprozeduren abhängig. Eine Zeitredundanz verringert somit die Zahl der möglichen Kommunikationspartner innerhalb eines Netzes.

Der Erfindung liegt bei einem Verfahren der obengenannten Art die Aufgabe zugrunde, die zum Austausch von Signalisierungssignalen benötigten Zeiten zu verkürzen und redundante Nutzinformation zu vermeiden, um die Übertragungskapazität besser an die zu übertragende Informationsmenge anzupassen. Ferner liegt der Erfindung die Aufgabe zugrunde, eine Vorrichtung zur Durchführung dieses Verfahrens anzugeben.

Diese Aufgaben werden durch die Merkmale der Patentansprüche 1 bzw. 7 gelöst.

Die Erfindung hat den Vorteil, daß die Verfügbarkeit der zentralen Recheneinheit bzw. der Übertragungswege erhöht wird. Die bei der oben beschriebenen Übertragungsprozedur nach dem Stand der Technik notwendige, den Übertragungsweg blockierende Reaktionszeit wird eingespart, weil die untergeordnete Einheit die zu übertragenden Daten unabhängig von den Aktivitäten der zentralen Recheneinheit selbständig bereitstellt, was sich insbesondere in den Fällen auswirkt, in welchen kein Übertragungswunsch einer untergeordneten Einheit vorliegt.

Weiterbildungen der Erfindung ergeben sich aus den Unteransprüchen.

Im folgenden wird die Erfindung anhand zweier Ausführungsbeispiele weiter beschrieben.

Fig. 1 zeigt schematisch ein busorientiertes, hierarchisch organisiertes Übertragungssystem,

Fig. 2 zeigt den zeitlichen Ablauf einer Anfrage-/Quittungsprozedur eines Übertragungssystems nach Fig. 1,

Fig. 3 zeigt ein Blockschaltbild einer Schaltung in einer untergeordneten Einheit eines Übertragungssystems,

Fig. 4 zeigt ein Ausführungsbeispiel einer Logikeinheit nach Fig. 3,

Fig. 5 und 6 zeigen jeweils in einen Übertragungsrahmen gepackte Daten,

Fig. 7 zeigt ein Blockschaltbild einer weiteren Schaltung in einer untergeordneten Einheit.

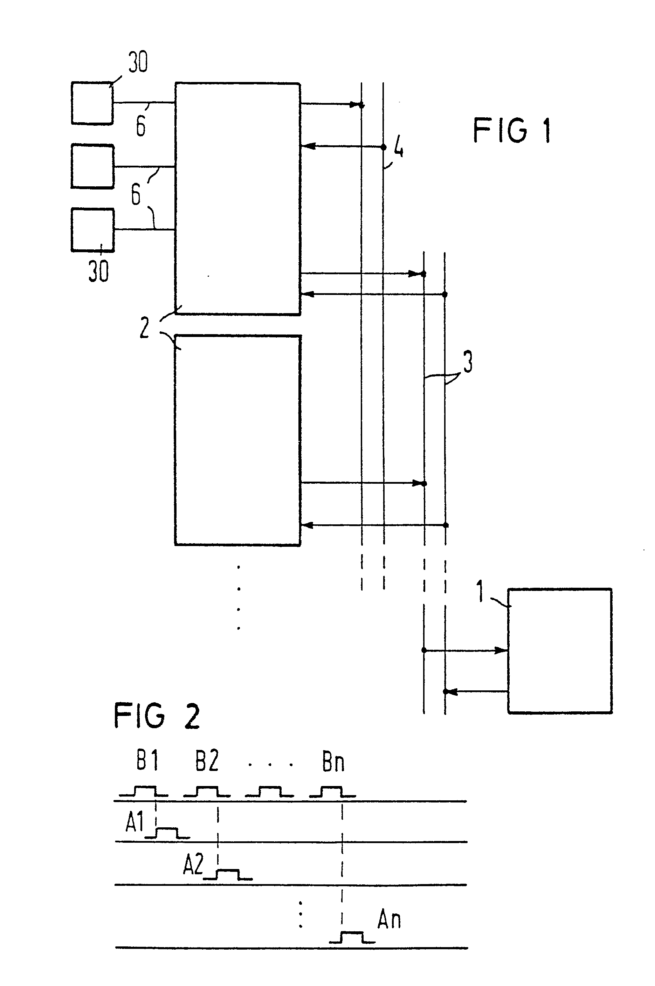

Das Übertragungsnetzwerk in Fig. 1 besteht aus einer zentralen Recheneinheit 1, aus mehreren Konzentratoren 2, aus einem Datenbus 4 zur Übertragung von Nutzdaten und aus einem Signalisierungsbus 3 zur Übertragung von Signalisierungsdaten. Alle Konzentratoren 2 sind mit dem zentralen Rechner 1 über den Signalbus 3 verbunden. Dieser besteht aus zwei Leitungen zur bitseriellen Datenübertragung, wobei jeweils eine Empfangsleitung 3 für den Empfang und eine Sendeleitung 34 zum Senden vorgesehen sind. An jeden der Konzentratoren 2 sind über Leitungsverbindungen (Adernpaare 6) mehrere Endstellen 30 angeschlossen, die analoge oder digitale Signale empfangen und senden können. Die Konzentratoren 2 schalten nach Koordination durch die zentrale Recheneinheit 1 Datenströme auf das Bussystem.

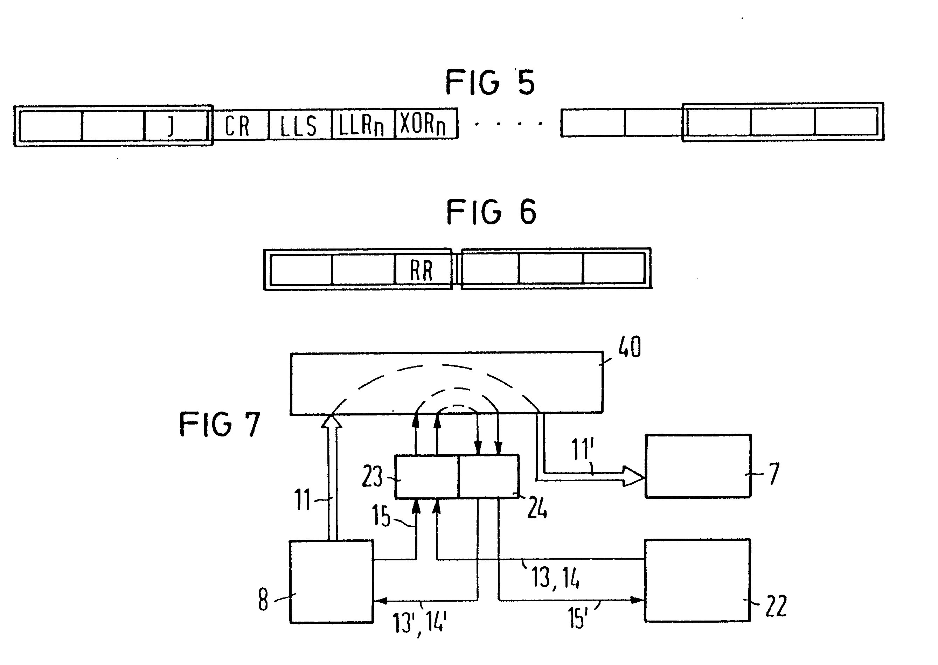

Eine wesentliche Aufgabe der Konzentratoren 2 ist, Signalisierungsdaten von den Endstellen 30 zur zentralen Recheneinheit 1 zu leiten. Sie können dazu nach Fig. 7 zur Entlastung der zentralen Recheneinheit 1 jeweils mit einem sogenannten Vorrechner 40 versehen sein.

Die folgenden Figuren und ihre Beschreibung betreffen die Übertragung von Signalisierungsdaten, die beispielhaft nach einem packetorientierten, gemäß X.25 Protokoll standardisierten Verfahren erfolgt.

In Fig. 2 sind über der Zeit schematisch die Übertragungsaufforderungen B1 bis Bn des zentralen Rechners 1 und die davon abhängigen Antwortsignale A1 bis An der Konzentratoren 2 wiedergegeben. Die zentrale Recheneinheit 1 sendet als Master nacheinander Befehle an die Slaves. Der erste Befehl B1 ist an einen ersten Konzentrator gerichtet, der sofort mit einer Antwort A1 reagiert. Der zweite Befehl B2 ist an einen zweiten Konzentrator gerichtet, welcher mit A2 antwortet usw.

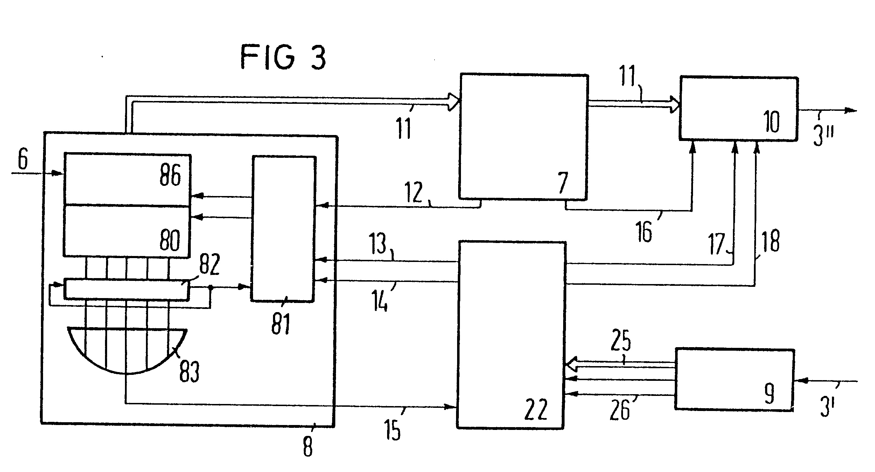

Die Schaltung, die in Fig. 3 als Blockschaltbild wiedergegeben ist, ist in jedem der Konzentratoren 2 realisiert. Sie weist eine Logikeinheit 8, bestehend aus einem Pufferspeicher 86, einem Änderungsdekoder 80, einer Übertragungskontrolleinheit 81, einem Statusregister 82 und aus einem ODER-Glied 83, einen FIFO-Speicher 7, einen Sender 10, einen Empfänger 9 und eine Kontrolleinheit 22 auf.

Nach außen ist die Schaltung über die Adernpaare 6 mit den Endstellen 30 verbunden. Ferner werden über die Empfangsleitungen 3' des Signalisierbusses 3 HDLC-Meldungen empfangen und über die Sendeleitung 3'' HDLC-Meldungen an die zentrale Recheneinheit 1 gesendet.

Der Betrieb der einzelnen Endstellen 30 ist individuell nach Zeitpunkt, Häufigkeit und Dauer unterschiedlich. Es muß jedoch zur Einhaltung von kurzen Reaktionszeiten sichergestellt sein, daß jeder Wunsch zur Inbetriebnahme sofort ausgeführt oder zumindest unverzüglich durch ein Meldesignal quittiert wird.

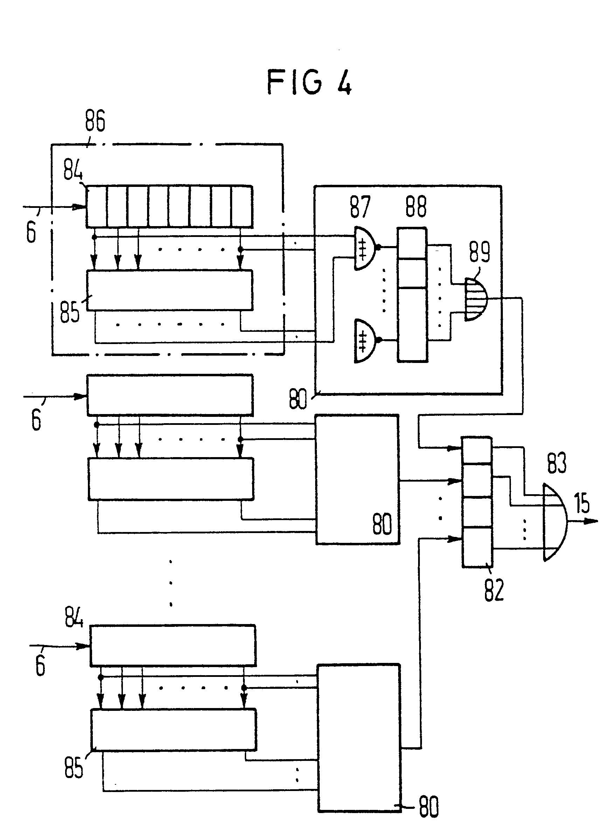

Wie Fig. 4 zeigt, ist deshalb jeder Endstelle 30 in der Logikeinheit 8 ein erstes Pufferregister 84 zur seriellen Aufnahme und Zwischenspeicherung einer ankommenden Signalisierungsinformation zugeordnet. Jeweils nach einem vorgegebenen Zeitintervall werden alle Endstellen 30 abgefragt und die ersten Pufferregister 84 beschrieben. Zuvor werden ihre alten Inhalte jedoch in zweiten Pufferregistern 85 abgelegt, um durch bitweisen Vergleich ggf. eine Änderung im Datenstrom feststellen zu können. Das zweite Pufferregister 85 besteht aus Flip-Flops mit Vorbereitungseingängen (T-Flip-Flops), die ihren Eingangszustand jeweils an den Ausgang übernehmen, wenn ein Abfragezyklus der Endstellen 30 beendet ist.

Der Vergleich Eingang/Ausgang erfolgt über die Änderungsdetektoren 80. Deren Ausgänge sind eingangsseitig so auf das als Schieberegister ausgeführte Status-Register 82 geführt, daß jeder Bitstelle ein bestimmter Änderungsdetektor 80 zugeordnet ist. Bei einer Änderung in einem oder mehreren der Pufferregistern 83, 84 wird somit die zugeordnete Statusregisterstelle auf log. 1 gesetzt. Es wird dann also ein Kennzeichnen (Flag) erzeugt, welches anzeigt, daß eine Änderung auf einem bestimmten Datenkanal 6 erfolgte.

Jeder Änderungsdetektor 80 besteht aus Exklusiv-NOR-Gattern 87, die eingangsseitig mit jeweils einander zugeordneten Registerstellen der Pufferregister 84 und 85 verbunden sind, aus einem XOR-Register 88 an den Ausgängen der Exklusiv-NOR-Gatter 87 und aus einem ODER-Glied 89 an den Ausgängen des XOR-Registers 88. Alle Pufferregister 84, 85, alle XOR-Register 88 und das Status-Register 82 sind über einen internen Datenbus 11 mit einem als FIFO-Speicher 7 ausgebildeten Zwischenspeicher verbunden. Somit ist gewährleistet, daß alle die Änderung betreffenden, relevanten Daten zischengespeichert und übertragen werden können.

Alle Ausgänge des Status-Registers 82 sind mit dem ODER-Glied 83 verbunden, an dessen Ausgang also dann eine log. 1 abgreifbar ist, wenn auf einem der Datenkanäle 6 eine Signaländerung stattgefunden hat. Eine log. 1 (Flag gesetzt) zeigt den Zustand «Daten bereit» an.

Dieser wird in einer ersten Betriebsart A in der Konfiguration nach Fig. 3 durch die zentrale Recheneinheit 1 zyklisch abgefragt und ausgewertet. In einer zweiten Betriebsart B löst dieser Zustand den Zugriff eines lokalen Vorrechners 40 aus, welcher die Signalisierdaten vorverarbeitet (Fig. 7).

Betriebsart A:

Trifft eine der turnusmäßigen Sendeaufforderungen der zentralen Recheneinheit 1 beim Empfänger 9 ein, so wird von diesem der Befehl über parallele Leitungen 25 an die lokale Kontrolleinheit 22 weitergemeldet. Von der Kontrolleinheit 22 wird der Befehl interpretiert und das Signal «Daten bereit» auf Leitung 15 abgefragt. Ist dies gesetzt, so wird über die Leitung 17 ein Befehl «Sendebeginn» an den Sender 10 gegeben. Gleichzeitig wird über Leitung 13 ein Befehl an die Übertragungskontrolleinheit 81 gegeben, welcher diese auffordert, die Übertragung der relevanten Daten über den internen Datenbus 11 zu starten und im FIFO-Speicher 7 zur Ausgabe auf die Sendeleitung 3'' bereitzustellen. Dazu gehört der Inhalt des Statusregisters 82, der an erster Stelle abgespeichert wird, und die im Anschluß daran abgespeicherten Signalisierungsbytes derjenigen zweiten Pufferregister 85, die durch ein log. 1 im Statusregister 82 gekennzeichnet sind. Zur Weiterverarbeitung der Signalisierungsdaten ist es vorteilhaft, wenn auch die Inhalte der entsprechenden XOR-Register 88 abgespeichert und mit übertragen werden. Somit werden auch Informationen darüber übertragen, von welchen Adernpaaren 6 geänderte Daten empfangen wurden, und wo die Änderung innerhalb des Datenstromes erfolgte.

Vom Sender 10 wird der Speicherinhalt ausgelesen und in einem Informationsfeld eines sog. «I-Rahmens» (s. Fig. 5) auf den Signalbus 3 ausgegeben. Über Leitungen 12 wird der Übertragungskontrolleinheit 81 angezeigt, ob der FIFI-Speicher 7 vollständig belegt ist. Über Leitung 16 erhält der Sender 10 eine Meldung, wenn der FIFO-Speicher 7 nicht belegt ist. Sie dient somit als Endekriterium für den Sender 10. Die von der Logikeinheit 8 abgegebene Information kann von der zentralen Recheneinheit 1 beliebig oft abgerufen werden. Erst nach Eintreffen einer Empfangsquittung von der zentr. Recheneinheit 1, die über eine Leitung 26 an die Kontrolleinheit 22 weitergeleitet wird, wird ein Löschsignal über Leitung 14 an die Übertragungskontrolleinheit 81 übermittelt. Das hat zur Folge, daß das Statusregister 82 und die XOR-Register 88 gelöscht und die ersten Puffer-Register 83 für die Aufnahme neuer Signalisierungsdaten von den Datenkanälen 6 freigegeben werden.

Falls über Leitung 15 «Daten nicht bereit» (Pegel log 0) angezeigt ist, so wird über Leitung 18 die Aussendung eines kurzen Quittungszeichens über den Sender 10 bewirkt. Dieses ist in einem sog. «RR-Rahmen» verpackt (Fig. 6), dessen Aufbau im übrigen im HDLC-Protokoll im einzelnen beschrieben ist. Die zentrale Recheneinheit 1 fordert daraufhin den nächsten Konzentrator zum Senden auf.

Wie Fig. 5 zeigt, weist das Format eines I-Rahmens mehrere Felder auf. Das erste Feld enthält ein Eröffnungs-Byte bestehend aus einer vorgegebenen 0-1-Kombination. Das zweite Feld enthält im vorliegenden Beispiel die Absenderadresse.

Das dritte Feld dient zur Übertragung einer Rahmendefinition «I» bzw. «RR», welche bestimmt, ob es sich um einen I- bzw. RR-Rahmen handelt. Daran schließt sich im Fall des I-Rahmens ein Informationsfeld an, welches folgende Datenwörter enthält:

Ein Antwortprotokollfeld CR, ein Statusregisterfeld LLS, und jeweils mehrere, der Anzahl der Teilnehmer entsprechende Pufferregisterfelder $LLR_n$- und $XOR_n$-Registerfelder.

Die folgenden Felder sind zur Aufnahme von zwei Kontrollbytes vorgesehen, mit welchen eine positive bzw. negative Redundanzprüfung möglich ist. Den Abschluß des Rahmens bildet ein Ende-Byte mit einem vorgegebenen Bitmuster.

Der RR-Rahmen nach Fig. 6 besteht lediglich aus Eröffnungsfeld, Adreßfeld, Rahmendefinitionsfeld, Prüffeldern und Ende-Feld gemäß seiner Definition in HDLC-Protokoll.

Betriebsart B:

Anhand der in Fig. 7 schematisch wiedergegebenen Konfiguration wird im folgenden die Betriebsart B beschrieben. Zu ihrer Durchführung weist jeder Konzentrator 2 einen Vorrechner 40, beispielsweise einen Mikroprozessor, auf. Dieser ist unterbrechungsgesteuert, d.h. sobald an seinem Unterbrechungseingang ein Steuersignal anliegt, unterbricht er seine laufenden Programme und startet ein vorgegebenes Programm. Im vorliegenden Beispiel werden dabei die folgenden Verfahrensschritte durchgeführt:

Die von der Logikeinheit 8 über den internen Datenbus 11 kommenden Signalisierungsdaten werden einer Vorverarbeitung im Vorrechner 40 unterzogen, bevor sie über den internen BUS 11' in den FIFO-Speicher 7 eingeschrieben werden. Außerdem werden alle von der Kontrolleinheit 22 und der Logikeinheit 8 kommenden Steuersignale «Daten löschen» bzw. «Daten bereit» über ein Steuerregister 23 dem Vorrechner 40 zugeführt. Dieser steuert die Kontrolleinheit 22 und die Logikeinheit 8 über ein Befehlsausgaberegister 24.

Das Signal «Daten bereit» auf Leitung 15 zeigt dem Vorrechner 40 einen Unterbrechungswunsch der Logikeinheit 8 an. Daraufhin liest dieser das Statusregister 82, die ausgewählten zweiten Pufferregister 85 und XOR-Register 88. Diese Register sind solange in ihrem Zustand blockiert, bis der Vorrechner über Leitung 14 mit einer Empfangsquittung eine Löschung und Freigabe veranlaßt. Der Vorrechner führt mit den Daten eine Vorverarbeitung (beispielsweise Zifferintegration) durch und trägt die auf diese Weise komprimierten Daten in den FIFO-Speicher 7 ein. Dort werden die Daten zwischengespeichert, bis sie durch eine Abfrage seitens des Masters abgeholt werden und positiv quittiert sind. Auch hier führt das Verfahren dazu, daß zwischen Anfrage und Antwort der Übertragungsweg durch eine Reaktionszeit nicht unnötig blockiert wird. Das abzuholende Datenpaket wurde also vorbereitet, während der Master andere Slaves abgefragt hat.

**Patentansprüche**

1. Datenübertragungsverfahren in einem hierarchisch organisierten digitalen Übertragungsnetzwerk mit mindestens einer übergeordneten Einheit (1) und mit mehreren, über ein Bussystem (3, 4) angeschlossenen untergeordneten Einheiten (2), welche jeweils mit mehreren Endstellen (30) über Leitungsverbindungen (6) Daten austauschen, die nach einer Anfrage-/Quittungsprozedur an die übergeordnete Einheit (1) weitergeleitet werden, gekennzeichnet durch folgende Verfahrensschritte:

a) die über die Leitungsverbindungen (6) von den Endstellen (30) ankommenden Daten werden von den untergeordneten Einheiten (2) in einem regelmäßigen Turnus daraufhin geprüft, ob sie sich im Vergleich zum vorhergehenden Abfragezeitpunkt geändert haben,

b) falls eine Änderung erfolgt ist, werden

b1) in der untergeordneten Einheit (2) ein Kennzeichen (Flag) erzeugt und

b2) die empfangenen geänderten Daten sowie informationen darüber, von welcher der Leitungsverbindungen (6) die geänderten Daten empfangen und wo innerhalb dieser Daten eine Änderung festgestellt wurde, zwischengespeichert,

c) die übergeordnete Einheit (1) fordert die untergeordneten Einheiten (2) turnusmäßig nacheinander zur Datenübertragung auf,

d) falls ein Kennzeichen erzeugt ist, werden mindestens die zwischengespeicherten Daten einer entsprechenden Endstelle (30) an die übergeordnete Einheit (1) übertragen,

e) ist keine Änderung erfolgt, so wird von der untergeordneten Einheit (2) lediglich ein Quittungssignal an die übergeordnete Einheit (1) gesendet.

2. Verfahren nach Anspruch 1, dadurch gekennzeichnet, daß die zu übertragenden Daten solange zwischengespeichert werden, bis von der übergeordneten Einheit eine Empfangsquittung gesendet wird.

3. Verfahren nach einem der Ansprüche 1 oder 2, dadurch gekennzeichnet, daß ein Vorrechner (40) in der entsprechenden untergeordneten Einheit aktiviert wird, wenn ein Kennzeichen erzeugt wird, und daß der Vorrechner (40) daraufhin die das Kennzeichren verursachenden Daten vorverarbeitet und der Zwischenspeicherung zuführt.

4. Datenübertragungsverfahren nach einem der Ansprüche 1 bis 3, dadurch gekennzeichnet, daß eine Kontrolleinheit (22) in einer untergeordneten Einheit das Vorhandensein von Kennzeichen prüft, wenn eine Übertragungsaufforderung der übergeordneten Einheit erfolgt, und die Übertragung der zwischengespeicherten Daten und weiteren Information bzw. der Empfangsquittung bewirkt.

5. Vorrichtung zur Durchführung des Verfahrens nach einem der Ansprüche 1 bis 4, dadurch gekennzeichnet, daß die einer untergeordneten Einheit zugeführten Leitungsverbindungen einer Logikeinheit (8) zugeführt sind, die jeweils einer Leitungsverbindung zugeordnete Änderungsdetektoren (80) zum Erzeugen der Kennzeichen aufweisen, deren Ausgänge mit einem Statusregister (82) zur Aufnahme der Kennzeichen verbunden sind.

6. Vorrichtung nach Anspruch 5, dadurch gekennzeichnet, daß das Statusregister (82) ausgangsseitig mit einem ODER-Glied (83) verbunden ist.

7. Vorrichtung nach einem der Ansprüche 5 oder 6, gekennzeichnet durch einen Pufferspeicher (86) zwischen den Leitungsverbindungen und den zugeordneten Änderungsdetektoren (80).

8. Vorrichtung nach Anspruch 7, gekennzeichnet durch einen Zwischenspeicher (7) und einen damit verbundenen internen Datenbus (11) in jeder untergeordneten Einheit, an welchen ausgangsseitig alle Pufferspeicher (86) angeschlossen sind.

9. Vorrichtung nach Anspruch 8, dadurch gekennzeichnet, daß das Statusregister (82) am internen Datenbus (11) angeschlossen ist.

10. Vorrichtung nach einem der Ansprüche 7 oder 8, dadurch gekennzeichnet, daß jeder Änderungsdetektor (80) mit einem den Ort einer Änderung innerhalb eines Datenstromes anzeigenden XOR-Registers (88) versehen ist, welches am internen Datenbus (11) angeschlossen ist.

11. Vorrichtung nach einem der Ansprüche 5 bis 10, gekennzeichnet durch einen unterbrechungsgesteuerten Vorrechner (40) in jeder untergeordneten Einheit, dessen Unterbrechungssteuerungseingang mit dem Ausgang des ODER-Gliedes (83) und dessen Dateneingänge bzw. Datenausgänge mit dem internen Datenbus (11) verbunden sind.

12. Vorrichtung nach Anspruch 11, gekennzeichnet durch ein weiteres Status-Register (23) zwischen der Logikeinheit (8) und der Kontrolleinheit (22) einerseits und den Steuereingängen des Vorrechners (40) andererseits.

13. Vorrichtung nach Anspruch 11 oder 12, gekennzeichnet durch ein Befehlsausgaberegister (24) zwischen dem Vorrechner (40) einerseits und der Logikeinheit (8) und der Kontrolleinheit (22) andererseits.

**Claims**

1. Data transmission system in a hierarchically organized digital transmission network, having at least one superordinate unit (1) and having a plurality of subordinate units (2) which are connected via a bus system (3, 4) and which exchange data in each case with a plurality of terminals (30) via line connections (6), which data are forwarded in accordance with a polling/acknowledgement procedure to the superordinate unit (1), characterized by the following system steps:

a) the data coming in from the terminals (30) via the line connections (6) are checked in regular rotation by the subordinate units (2) as to whether they have changed in comparison to the preceding polling time,

b) if a change has taken place

b1) a flag is generated in the subordinate unit (2) and

b2) the received changed data, as well as information regarding which of the line connections (6) the changed data were received from and where a change was established within these data, are temporarily stored,

c) the superordinate unit (1) requests the subordinate units (2) one after the other in rotation to transmit data,

d) if a flag is generated, at least the temporarily stored data of a corresponding terminal (30) are transmitted to the superordinate unit (1),

e) if no change has taken place then the subordinate unit (2) sends only an acknowledgement signal to the superordinate unit (1).

2. System according to Claim 1, characterized in that the data to be transmitted are temporarily stored until a receive acknowledgement is sent by the superordinate unit.

3. System according to one of Claims 1 or 2, characterized in that a preprocessor (40) is activated in the corresponding subordinate unit when a flag is generated, and in that the preprocessor (40) thereupon preprocesses the data causing the flag and sends them into temporary storage.

4. Data transmission system according to one of Claims 1 to 3, characterized in that a control unit (22) in a subordinate unit checks the presence of flags when the superordinate unit requests a transmission, and effects the transmission of the temporarily stored data and further information or the receive acknowledgement respectively.

5. Arrangement for the use of the system according to one of Claims 1 to 4, characterized in that the line connections connected to a subordinate unit are connected to a logic unit (8) which has change detectors (80) associated in each case with a line connection for generating the flags, the outputs of which change detectors are connected to a status register (82) for receiving the flags.

6. Arrangement according to Claim 5, characterized in that the status register (82) is connected on the output side to an OR element (83).

7. Arrangement according to one of Claims 5 or 6, characterized by a buffer memory (86) between the line connections and the associated change detectors (80).

8. Arrangement according to Claim 7, characterized by a temporary store (7) and an internal data bus (11) connected thereto in each subordinate unit, and to which all buffer memories (86) are connected on the output side.

9. Arrangement according to Claim 8, characterized in that the status register (82) is connected on the internal data bus (11).

10. Arrangement according to one of Claims 7 or 8, characterized in that each change detector (80) is equipped with an XOR register (88) which indicates the location of a change within a data stream and which is connected on the internal data bus (11).

11. Arrangement according to one of Claims 5 to 10, characterized by an interrupt-controlled preprocessor (40) in each subordinate unit, the interrupt control input of which is connected to the output of the OR element (83) and the data inputs or data outputs of which are connected to the internal data bus (11).

12. Arrangement according to Claim 11, characterized by a further status register (23) between the logic unit (8) and the control unit (22) on the one hand and the control inputs of the preprocessor (40) on the other hand.

13. Arrangement according to Claim 11 or 12, characterized by an instruction output register (24) between the preprocessor (40) on the one hand and the logic unit (8) and the control unit (22) on the other hand.

**Revendications**

1. Procédé de transmission de données dans un réseau numérique de transmission, organisé de façon hiérarchisée et comportant au moins une unité de rang supérieur (1) et plusieurs unités subordonnées (2), qui sont raccordées par l'intermédiaire d'un système de bus (3, 4) et échangent respectivement avec plusieurs postes terminaux (30), par l'intermédiaire de lignes de liaison (6), des données qui sont retransmises à l'unité de rang supérieur (1) conformément à une procédure de demande/d'accusé de réception, caractérisé par les étapes opératoires suivantes:

a) les données qui arrivent des postes terminaux (30) par l'intermédiaire des lignes de liaison (6) sont testées régulièrement à tour de rôle par les unités subordonnées (2) de manière à savoir si elles ont changé par rapport à l'instant antérieur d'interrogation,

b) dans le cas où une modification est apparue,

b1) un signal caractéristique (Flag) est produit dans l'unité subordonnée (2), et

b2) les données modifiées reçues, ainsi que des informations concernant celle des lignes de liaison (6) qui a reçu les données modifiées, et l'endroit où une modification a été déterminée à l'intérieur de ces données, sont mémorisées temporairement,

c) l'unité de rang supérieur (1) demande aux unités subordonnées (2) de réaliser tour à tour, successivement, la transmission des données,

d) dans le cas où un signal caractéristique est produit, au moins les données, mémorisées temporairement, d'un poste terminal correspondant (30) sont transmises à l'unité de rang supérieur (1),

e) si aucune modification n'est apparue, seul un signal d'accusé de réception est envoyé par l'unité subordonnée (2) à l'unité de rang supérieur (1).

2. Procédé suivant la revendication 1, caractérisé par le fait que les données à transmettre sont mémorisées temporairement jusqu'à ce qu'un accusé de réception soit émis par l'unité de rang supérieur.

3. Procédé suivant l'une des revendications 1 ou 2, caractérisé par le fait qu'un calculateur frontal (40) situé dans l'unité subordonnée correspondante est activé lorsqu'un signal caractéristique est produit, et que le calculateur frontal (40) réalise alors le traitement préalable des données provoquant l'apparition du signal caractéristique et le délivre de manière qu'elles soient mémorisées temporairement.

4. Procédé de transmission de données suivant l'une des revendications 1 à 3, caractérisé par le fait qu'une unité de contrôle (22) située dans une unité subordonnée contrôle la présence de signaux caractéristiques, lorsqu'une demande de transmission est présentée par l'unité de rang supérieur, et déclenche la transmission des données mémorisées temporairement ou d'autres données ou de l'accusé de réception.

5. Dispositif pour la mise en œuvre du procédé suivant l'une des revendications 1 à 4, caractérisé par le fait que les lignes de liaison associées à une unité subordonnée sont reliées à une unité logique (8), qui contient les détecteurs de modifications (80), qui sont associés à des lignes de liaison respectives et servent à produire les signaux caractéristiques et dont les sorties sont reliées à un registre d'état (82) servant à recevoir les signaux caractéristiques.

6. Dispositif suivant la revendication 5, caractérisé par le fait que le registre d'état (82) est relié, côté sortie, à un circuit OU (83).

7. Dispositif suivant l'une des revendications 5 ou 6, caractérisé par une mémoire tampon (86) montée entre les lignes de liaison et les détecteurs associés de modifications (80).

8. Dispositif suivant la revendication 7, caractérisé par une mémoire intermédiaire (7) et un bus interne (11) de transmission de données, qui est relié à cette mémoire, dans chaque unité subordonnée, et à la sortie duquel sont raccordées toutes les mémoires tampons (86).

9. Dispositif suivant la revendication 8, caractérisé par le fait que le registre d'état (82) est raccordé à un bus interne (11) de transmission de données.

10. Dispositif suivant l'une des revendications 7 ou 8, caractérisé par le fait que chaque détecteur de modifications (80) est équipé d'un registre XOR (88), qui indique l'emplacement d'une modification à l'intérieur d'un flux de données et est raccordé au bus interne (11) de transmission de données.

11. Dispositif suivant l'une des revendications 5 à 10, caractérisé par un calculateur frontal (40), qui est commandé par des interruptions, dans chaque unité subordonnée, et dont l'entrée de commande par des interruptions est reliée à la sortie du circuit OU (83) et dont les entrées ou les sorties de données sont reliées au bus interne (11) de transmission de données.

12. Dispositif suivant la revendication 11, caractérisé par un autre registre d'état (23) disposé entre l'unité logique (8) et l'unité de contrôle (22) d'une part et les entrées de commande du calculateur frontal (40) d'autre part.

13. Dispositif suivant la revendication 11 ou 12, caractérisé par un registre (24) de sortie d'instructions monté entre le calculateur frontal (40) d'une part et l'unité logique (8) et l'unité de contrôle (22) d'autre part.

FIG 1

30

6

6

30

2

4

3

1

FIG 2

B1    B2    · · ·    Bn

A1

A2

An

# FIG 3

EP 0 133 577 B1

# FIG 4

**FIG 5**

**FIG 6**

**FIG 7**